# EUROPÄISCHE PATENTANMELDUNG

(11) **EP 4 653 097 A1**
(43) Veröffentlichungstag der Anmeldung: **26.11.2025**
(21) Anmeldenummer: 25172680.8
(22) Anmeldetag: 25.04.2025
(51) Int. Cl.: B05C 5/02, B05B 12/12, B05C 11/10, B29C 44/34, B60K 1/04, H01M 10/613, H01M 10/625, H01M 10/647, H01M 50/124

(54) **BESCHICHTUNGSVORRICHTUNG, SYSTEM UND VERFAHREN ZUM AUFBRINGEN EINES BESCHICHTUNGSMEDIUMS**

(30) Priorität: 22.05.2024 DE 102024114343
(71) Anmelder: ERTL Technology GmbH, 94330 Aiterhofen (DE)
(72) Erfinder: ERTL, Michael, 94315 Straubing (DE)
(74) Vertreter: advotec.

(57) **Zusammenfassung**

System (1000) mit Beschichtungsvorrichtung (100) zum Aufbringen eines Beschichtungsmediums auf einem Bauteil (10), die Beschichtungsvorrichtung (100) aufweisend, eine Erfassungseinrichtung (102), die dazu eingerichtet ist, mindestens eine Geometrieeigenschaft (h) des Bauteils (10) zu erfassen, und mindestens eine relativ zu dem Bauteil (10) verfahrbare Beschichtungsdüse (104), die dazu eingerichtet ist, das Beschichtungsmedium in Abhängigkeit der mindestens einen Geometrieeigenschaft (h) und in Abhängigkeit mindestens eines auf der mindestens einen Geometrieeigenschaft (h) basierenden vorbestimmten, bauteilabhängigen Beschichtungskriteriums, insbesondere selektiv, zu beschichten.

## Beschreibung

Die Erfindung betrifft eine Beschichtungsvorrichtung, ein System aufweisend eine solche Beschichtungsvorrichtung, einen Energiespeicher und ein Verfahren zum Aufbringen eines Beschichtungsmediums.

Die präzise und ortsgenaue Applikation von Beschichtungsmedien ist eine technische Herausforderung, die in verschiedenen Industriebereichen von Bedeutung ist. Einflussfaktoren wie Umgebungsbedingungen können die Eigenschaften des Beschichtungsmediums verändern und dessen korrekte Aufbringung erschweren. Insbesondere ist dies der Fall in Anwendungen, bei denen das Beschichtungsmedium örtlich exakt aufgetragen werden muss, während umliegende Bereiche frei von der Beschichtung bleiben sollen. Fehler beim Aufbringen können zu Beeinträchtigungen der Funktionstüchtigkeit des beschichteten Bauteils führen, was negative Folgen, wie einen erhöhten Ausschuss, nach sich ziehen kann.

Ein Beispiel für die Komplexität und die Wichtigkeit dieses Prozesses findet sich in der Batterietechnologie, speziell bei der Herstellung von Hochvoltspeichern. Diese bestehen aus einzelnen runden Zellen, die über Zellgürtel verbunden sind und in weiteren Prozessschritten zu Zellclustern zusammengefügt werden. Diese Cluster bilden das Speicherfundament des Energiespeichers, der dann durch weitere Fertigungsschritte, wie das Verschweißen mit einem Zellkontaktiersystem und das Anbringen von Summenstromverbindern funktionsbereit gemacht wird. Zur Gewährleistung der notwendigen Festigkeit und Funktionalität des Energiespeichers, insbesondere bei Anwendungen des elektrifizierten Fortbewegens, wird der Energiespeicher geschäumt, indem ein Schaum in ein Gehäuse des Energiespeichers eingebracht wird, der sich zwischen die Zellen und weiteren Komponenten verteilt und so etwaige Zwischenräume ausfüllt. Dadurch werden die Zellen des Zellclusters sowie die weiteren Komponenten des Energiespeichers in einer jeweils vorbestimmten Position gehalten. Der Schaum härtet durch festen Formschluss aus und verleiht dem Energiespeicher so die erforderliche Robustheit bzw. Festigkeit für die spätere Anwendung.

Allerdings haben Funktionstests des Energiespeichers ergeben, dass der ausgehärtete Schaum sich an der Oberfläche der Zellschulter ablösen kann, was zur (verfrühten) Unbrauchbarkeit des Energiespeichers führt. Eine Möglichkeit zur Verhinderung des Ablösens ist das Aufbringen eines Haftvermittlers zwischen den Zellschultern und dem Schaum. Aufgrund der funktionalen Beschaffenheit des Hochvoltspeichers darf ein solcher Haftvermittler jedoch nicht außerhalb von Bereichen der Zellschulter aufgebracht werden, und insbesondere keine anderen Bereiche des Energiespeichers, wie beispielsweise Teile des Zellkontaktiersystems und/oder des Summenstromverbinders benetzen, da dies zu einem Ausfall und zu einer Kurzschlussgefahr für den Energiespeicher führen würde.

Es ist eine Aufgabe der Erfindung, eine Beschichtungsvorrichtung und/oder ein System zum Aufbringen eines Beschichtungsmediums und/oder einen Energiespeicher und/oder ein Verfahren zum Aufbringen eines Beschichtungsmediums anzugeben, die/das die vorstehend genannten Herausforderungen überwindet.

Die Aufgabe wird gelöst durch eine Beschichtungsvorrichtung nach Anspruch 1. Die Aufgabe wird gelöst durch ein System nach Anspruch 10. Die Aufgabe wird gelöst durch einen Energiespeicher nach Anspruch 12. Die Aufgabe wird gelöst durch ein Verfahren nach Anspruch 15.

Vorteilhafte Ausführungsformen der Erfindung sind Gegenstand der abhängigen Ansprüche. In den Rahmen der Erfindung fallen sämtliche Kombinationen aus mindestens zwei in der Beschreibung, den Ansprüchen und/oder den Figuren offenbarten Merkmalen. Es versteht sich, dass die zu der Beschichtungsvorrichtung gemachten Ausführungen sich in äquivalenter Weise auf das System und/oder den Hochvolt-Energiespeicher und/oder das Verfahren beziehen, ohne für dieses bzw. diesen redundant genannt zu werden. Hierbei versteht es sich insbesondere, dass sprachübliche Umformungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden. Demnach können gegenständlich formulierte Merkmale ohne weiteres als Merkmale des Verfahrens umformuliert werden, ohne dass hierzu die genaue Formulierungsweise offenbart sein muss.

In einem ersten Aspekt wird eine Beschichtungsvorrichtung zum insbesondere selektiven bzw. ortsaufgelösten Aufbringen eines Beschichtungsmediums auf einem Bauteil vorgeschlagen. Die Beschichtungsvorrichtung weist eine Erfassungseinrichtung, die dazu eingerichtet ist, mindestens eine Geometrieeigenschaft des Bauteils zu erfassen, und mindestens eine relativ zu dem Bauteil verfahrbare Beschichtungsdüse auf, die dazu eingerichtet ist, das Beschichtungsmedium in Abhängigkeit der mindestens einen Geometrieeigenschaft und in Abhängigkeit mindestens eines auf der mindestens einen Geometrieeigenschaft basierenden vorbestimmten, bauteilabhängigen Beschichtungskriteriums, insbesondere selektiv, zu beschichten.

Die mindestens eine Beschichtungsdüse kann ferner bevorzugt dazu eingerichtet sein, das Beschichtungsmedium auch in Abhängigkeit einer Auftragungsgeschwindigkeit, mit der sich die mindestens eine Beschichtungsdüse relativ zu dem Bauteil bzw. einer Bauteiloberfläche bewegt, aufzutragen. Die Auftragungsgeschwindigkeit kann beispielsweise als dreidimensionale, vektorielle Größe bei der Ansteuerung der mindestens einen Beschichtungsdüse verwendet werden. Die Auftragungsgeschwindigkeit kann in Abhängigkeit mindestens einer Beschleunigung in einem Bewegungsfreiheitsgrad der mindestens einen Beschichtungsdüse auch dynamisch veränderlich sein. Die Auftragungsgeschwindigkeit kann vorzugsweise durch Geschwindigkeitssensoren, die an der Beschichtungsvorrichtung angebracht sind, messbar bzw. erfassbar sein. Es können alternativ auch Beschleunigungssensoren zur Messung von Beschleunigungen in mindestens einem Bewegungsfreiheitsgrad zum Einsatz kommen. Aus einer erfassten Beschleunigung kann dann die jeweilige Auftragungsgeschwindigkeit zumindest zeitlich partiell bestimmt werden.

Die Geometrieeigenschaft kann beispielsweise eine Höhe bzw. ein Höhenprofil einer Bauteiloberfläche relativ zu der Erfassungseinrichtung sein. Die Geometrieeigenschaft kann beispielsweise eine Höhe einer Bauteiloberfläche relativ zu der mindestens einen Beschichtungsdüse sein, insbesondere wenn eine geometrische Beziehung zwischen der Erfassungseinrichtung und der mindestens einen Beschichtungsdüse bekannt oder eindeutig bestimmbar ist, vorzugsweise, wenn ein Abstand der Erfassungseinrichtung zu der mindestens einen Beschichtungsdüse, insbesondere in Bezug auf die mindestens eine Geometrieeigenschaft, bekannt ist. Die Geometrieeigenschaft kann auch eine Breite bzw. ein Breitenprofil und/oder eine Länge bzw. ein Längenprofil aufweisen, das durch die Erfassungseinrichtung, insbesondere relativ zu der mindestens einen Beschichtungsdüse, eindeutig ermittelbar ist. Die Geometrieeigenschaft kann auch ein sonstiges geometrisches Profil mindestens einer Bauteiloberfläche sein.

Die mindestens eine Beschichtungsdüse ist vorzugsweise relativ zu dem Bauteil und/oder einer Bauteiloberfläche zumindest in einem, vorzugsweise zumindest in zwei Bewegungsfreiheitsgraden beweglich. Besonders bevorzugt kann die mindestens eine Beschichtungsdüse auch in mindestens einem Bewegungsfreiheitsgrad rotierbar sein. Handelt es sich bei der Geometrieeigenschaft um eine Höhe bzw. ein Höhenprofil des Bauteils relativ zu der Erfassungseinrichtung bzw. relativ zu der mindestens einen Beschichtungsdüse, kann die mindestens eine Beschichtungsdüse vorzugsweise zumindest in einer zu der Höhe orthogonalen Bewegungsrichtung bewegbar sein.

Das Beschichtungskriterium kann in Abhängigkeit des Bauteils bzw. von den zu beschichtenden Bereichen des Bauteils bestimmt sein. Das Beschichtungskriterium kann sich bezüglich einer zu beschichtenden Oberfläche des Bauteils auch abschnittsweise verändern. Dies hängt maßgeblich von der geometrischen Beschaffenheit und Komplexität der zu beschichtenden Bauteiloberfläche ab. Beispielsweise kann die zu beschichtende Bauteiloberfläche in Raster unterteilt werden, wobei für mindestens zwei der Raster ein unterschiedliches Beschichtungskriterium gewählt werden kann. Besonders bevorzugt kann durch die Wahl des Beschichtungskriteriums erreicht werden, dass nur selektive Bereiche der Bauteiloberfläche(n) mit dem Beschichtungsmedium beschichtet werden. Durch die Erfassungseinrichtung ist dies insbesondere auch im Online-Betrieb der Beschichtungsvorrichtung möglich. So kann durch die Erfassungseinrichtung vorzugsweise vorauseilend die mindestens eine Geometrieeigenschaft des Bauteils bzw. der Bauteiloberfläche optisch abgetastet bzw. erfasst und mit dem mindestens einen Beschichtungskriterium verglichen werden. Nur wenn das Beschichtungskriterium erfüllt ist, wird dann ortsaufgelöst, in Abhängigkeit der Geometrieeigenschaft, das Beschichtungsmedium aufgebracht. Das Beschichtungskriterium kann ein absoluter Grenzwert, vorzugsweise mit einem bestimmbaren Toleranzintervall sein. Das Beschichtungskriterium kann ein Grenzintervall aufweisen. Das Beschichtungskriterium kann auch derart gewählt werden, dass angegeben wird, welche Bereiche des Bauteils in Abhängigkeit der Geometrieeigenschaft nicht beschichtet werden sollen. So kann die mindestens eine Beschichtungsdüse beispielsweise auch nur dann zum Auftragen angesteuert werden, wenn das mindestens eine Beschichtungskriterium nicht erfüllt ist. Eine derartige negative Formulierung des Beschichtungskriteriums ist von der vorliegenden Offenbarung ebenfalls abgedeckt.

Das Aufbringen des Beschichtungsmediums kann vorliegend mit einer Genauigkeit von mindestens 0,1 mm erfolgen, da die mindestens eine Beschichtungsdüse in Abhängigkeit des mindestens einen Geometrieeigenschaft nur bei Erfüllen des mindestens einen Beschichtungskriteriums angesteuert bzw. zum Aufbringen des Beschichtungsmediums geöffnet bzw. freigegeben wird. Derart ist es vorliegend möglich, nur vorbestimmte Teilbereiche des Bauteils zu beschichten, wohingegen andere Bereiche frei von dem Beschichtungsmedium bleiben. Dadurch kann verhindert werden, dass das Bauteil aufgrund einer ansonsten eventuell fehlerhaften, aufgebrachten Beschichtung funktionsunfähig ist. So kann der Ausschuss vermindert werden. Ferner kann das Bauteil mit der mit der Beschichtung einhergehenden Funktion nur dort ausgestattet werden, wo es funktional vorgesehen ist. Ferner kann aufgrund der ortsaufgelöst aufgebrachten Beschichtung Beschichtungsmedium eingespart werden, da beispielsweise Bereiche, die nicht notwendigerweise beschichtet werden müssen, frei von Beschichtung bleiben.

In einem weiteren Aspekt wird vorgeschlagen, dass die Erfassungseinrichtung einen laserbasierten Triangulations-Sensor zum Abtasten einer Höhe des Bauteils relativ zu der Erfassungseinrichtung und/oder der Beschichtungsdüse, oder einen Laser-Profilsensor zum Erfassen eines Höhenprofils des Bauteils relativ zu der Erfassungseinrichtung und/oder der Beschichtungsdüse aufweist.

Ein laserbasierter Triangulations-Sensor zur Erfassung einer Höhe ist vorzugsweise ein Messinstrument, das die Eigenschaften von Laserlicht nutzt, um die Höhe oder Abstandsinformation des Bauteils bzw. einer Bauteiloberfläche, allgemein eines Objekts, zu bestimmen. Das Funktionsprinzip basiert auf der Triangulation, bei der aus einem Winkel und einer Entfernung zu einem Referenzpunkt eine Position eines Punktes im Raum berechnet wird. Ein laserbasierter Triangulations-Sensor sendet vorzugsweise einen Laserstrahl aus, der auf das zu messende Bauteil trifft und von diesem reflektiert wird. Der reflektierte Strahl wird von einem Detektor im Triangulations-Sensor erfasst. Die Position, an der der reflektierte Strahl auf den Detektor trifft, hängt vom Abstand des Objekts zum Sensor ab. Durch die geometrischen Beziehungen in der Anordnung von Laserquelle, Detektor und Bauteil kann die Höhe oder der Abstand des Bauteils relativ zu dem Triangulations-Sensor genau berechnet werden.

Ein Laser-Profilsensor zur Erfassung eines Höhenprofils ist ein Messinstrument, das auf der Technik der optischen Triangulation basiert, ähnlich wie ein einzelner Triangulationssensor, jedoch mit erweiterten Fähigkeiten. Er wird verwendet, um ein Profil einer Oberfläche entlang einer Linie zu erfassen, anstatt nur einen einzelnen Punkt der Bauteiloberfläche zu messen. Dies ermöglicht es, detaillierte 2D oder 3D-Profile und Maße von der Bauteiloberfläche zu erstellen. Der Laser-Profilsensor emittiert vorzugsweise einen Laserstrahl, der als Linie über das zu messende Bauteil projiziert wird. Dies geschieht vorzugsweise mithilfe einer speziellen Optik, die den Laserstrahl von einem Punkt in eine Linie ausweitet. Der Laserstrahl trifft auf die Oberfläche des Objekts und wird je nach Beschaffenheit und Form der Oberfläche des Bauteils unterschiedlich reflektiert. Ein hochauflösender Kamera- oder Detektorsensor erfasst das von der Bauteiloberfläche reflektierte Licht. Die Position, an der das reflektierte Licht auf den Sensor trifft, variiert je nach Höhe und Kontur der Oberfläche. Die Daten über die Positionen des reflektierten Lichts werden analysiert, um ein genaues Profil der Oberfläche entlang der Linie zu erstellen. Die geometrischen Beziehungen zwischen dem Sensor, der Laserlinie und den Detektorpositionen ermöglichen die Berechnung des Höhenprofils der Oberfläche des Bauteils relativ zu dem Laser-Profilsensor. Der Laserprofilsensor kann auch als Laserlinien-Sensor verstanden werden.

In Abhängigkeit des mindestens einen Beschichtungskriterium, das in Abhängigkeit des erfassten Abstandes bzw. Profils des Bauteils bestimmbar ist, werden so vorliegend nur Bereiche der Bauteiloberfläche, für die das Beschichtungskriterium erfüllt ist, mit dem Beschichtungsmedium beschichtet. Der erfasste Abstand von dem Bauteil zu der Erfassungseinrichtung dient dabei vorzugsweise als Trigger für das Ansteuern eines zu der mindestens einen Beschichtungsdüse gehörenden Ventils. Mit einer Ansteuerungssoftware, die für diese Anwendung entwickelt wurde, erfolgt die Ansteuerung des Ventils der Beschichtungsdüse, insbesondere auch unter Berücksichtigung der aktuellen (vektoriellen) Auftragsgeschwindigkeit, mit der sich die mindestens eine Beschichtungsdüse relativ zu dem Bauteil bzw. der Bauteiloberfläche bewegt. Besonders bevorzugt können dabei mechanische und/oder fertigungstechnische und/oder ansteuerungstechnische Toleranzen des Ventils der mindestens einen Beschichtungsdüse über einstellbare bzw. wählbare Offset-Parameter, insbesondere düsen- bzw. ventilindividuell, angepasst werden.

Insbesondere der Laser-Profilsensor, jedoch auch der laserbasierte Triangulations-Sensor, hat/haben den Vorteil, dass das Bauteil inline, d.h. während der Fertigung bzw. dem Fertigstellen des Bauteils, hinsichtlich der mindestens einen Geometrieeigenschaft vermessen werden kann, ohne dass hierzu ein zusätzlicher Fertigungsschritt notwendig ist. Durch die Erfassungseinrichtung kann dabei vorzugsweise ein Inline-Druckbild auf Basis der Geometrieeigenschaft und des Beschichtungskriteriums erzeugt bzw. berechnet werden. Auf Basis dieses Inline-Druckbildes erfolgt dann vorzugsweise die Ansteuerung des Ventils der mindestens einen Beschichtungsdüse zur Benetzung eines vorbestimmten Teilbereiches bzw. Abschnittes einer Oberfläche des Bauteils. Das Inline-Druckbild kann auch als dynamisch, insbesondere während des Aufbringungsprozesses des Beschichtungsmediums, anpassbare Beschichtungsschablone aufgefasst werden.

In einem weiteren Aspekt wird vorgeschlagen, dass die Erfassungseinrichtung mindestens eine Kamera aufweist, wobei die mindestens eine Kamera dazu ausgebildet ist, mehrere, insbesondere mehr als zwei, Referenzpunkte an dem Bauteil bzw. auf einer Oberfläche oder zumindest auf einem Oberflächenabschnitt des Bauteils relativ zu der Erfassungseinrichtung und/oder der Beschichtungsdüse zu erfassen. Die Erfassungseinrichtung ist dazu eingerichtet, die erfassten Referenzpunkte mit entsprechenden Bezugspunkten einer vorbestimmten, insbesondere bauteilabhängigen Beschichtungsschablone abzugleichen, und, im Falle einer Abweichung zwischen zumindest einem der Referenzpunkte zu einem betreffenden Bezugspunkt, die Beschichtungsschablone zumindest partiell auf Basis der Abweichung, vorzugsweise dynamisch, anzupassen, insbesondere zumindest partiell zu dehnen oder zu stauchen.

Mit der Erfassungseinrichtung kann das Bauteil bzw. mindestens ein Oberflächenabschnitt des Bauteils derart vermessen und ausgewertet werden, dass ein Vergleich mit einer, insbesondere bauteilgenerischen Beschichtungsschablone möglich ist. Die Beschichtungsschablone gibt beispielsweise an, welche Bereiche eines Bauteils im Idealfall beschichtet werden sollen, wobei nicht zu beschichtende Bereiche durch die Beschichtungsschablone maskiert werden. Die Beschichtungsschablone wird vorzugsweise auf Basis von idealisierten Bauteilkonditionen (einer Fertigung ohne Toleranzen) individuell für eine zu beschichtende Bauteiloberfläche oder mindestens einen Oberflächenabschnitt erzeugt. Im Falle eines Energiespeichers, der mehrere als Zellcluster organisierte Zellen aufweist, bei denen nur Zellschulterbereiche beschichtet werden sollen, gibt die Beschichtungsschablone wieder, an welchen Bereichen bei einem ideal hergestellten Energiespeicher sich die jeweils zu beschichtenden Zellschulterbereiche befinden. Alle anderen Bereiche, wie beispielsweise Kontaktierungseinrichtungen oder auch Zwischenbereiche zwischen den Zellen werden durch die Beschichtungsschablone hingegen maskiert, um derart nicht beschichtet zu werden. Durch den Abgleich von Bezugspunkten auf der Beschichtungsschablone mit den erfassten Referenzpunkten kann festgestellt werden, wie sich das Bauteil aufgrund von realen Fertigungstoleranzen von einem idealen Bauteil unterscheidet. Somit kann festgestellt werden, wie sich eine bauteilspezifische Beschichtungsschablone von einer idealen Beschichtungsschablone unterscheidet. Vorzugsweise wird die Erfassung der Referenzpunkte sowie der Abgleich mit den jeweiligen Bezugspunkten segmentweise bzw. abschnittsweise durchgeführt. Die Beschichtungsschablone sowie die Bauteiloberfläche können beispielsweise in korrespondierende Raster unterteilt werden, wobei pro Raster ein Erfassen von Referenzpunkten und ein Abgleichen der jeweiligen Referenzpunkte mit den jeweiligen rasterspezifischen Bezugspunkten erfolgen kann. Derart kann ortsaufgelöst festgestellt werden, in welchen Abschnitten ein Abbild der Oberfläche des Bauteils von der idealisierten Druckschablone abweicht. Wird eine Abweichung festgestellt, kann dann vorzugsweise rasterweise die Druckschablone an die geometrischen Gegebenheiten des jeweiligen Bauteils angepasst werden. Das Anpassen kann durch zumindest partielle Streckung und/oder Stauchung der Druckschablone erfolgen. Die Druckschablone kann je nach Anwendungsfall zweidimensional oder dreidimensional sein.

In einem weiteren Aspekt wird vorgeschlagen, dass die Erfassungseinrichtung dazu eingerichtet ist, die mindestens eine Geometrieeigenschaft während des Beschichtungsvorgangs, insbesondere vorauseilend, zu ermitteln, oder wobei die Erfassungseinrichtung dazu eingerichtet ist, die mindestens eine Geometrieeigenschaft vor dem Beschichtungsvorgang zu ermitteln.

Eine zu beschichtende Oberfläche des Bauteils, für die die mindestens eine Geometrieeigenschaft zum Aufbringen des Beschichtungsmediums ermittelt werden soll, kann durch die Erfassungseinrichtung vorzugsweise in Echtzeit während des Beschichtungsvorgangs vorauseilend ermittelt werden. Dies bedeutet, dass die mindestens eine Geometrieeigenschaft vorzugsweise für Bereiche des Bauteils ermittelt wird, für die die Beschichtung noch nicht erfolgt ist, jedoch ggf. unmittelbar nachfolgend erfolgen wird. Dabei kann die Geometrieeigenschaft je nach Rechenleistung der Erfassungseinrichtung bzw. der Beschichtungsvorrichtung nur wenige Millisekunden bis Sekunden vor der Beschichtung des betreffenden Bereiches für diesen Bereich vorauseilend ermittelt werden. In anderen Fällen kann es von Vorteil sein, wenn die Geometrieeigenschaft im Voraus vor der Beschichtung des Bauteils gesamthaft für das Bauteil ermittelt und ggf. eine bauteilspezifische Druckschablone erzeugt wird.

In einem weiteren Aspekt wird vorgeschlagen, dass die Beschichtungsvorrichtung dazu eingerichtet ist, das vorbestimmte Beschichtungskriterium, vorzugsweise in Echtzeit oder auf eine vorbestimmte Weise vorauseilend, mit der mindestens einen erfassten Geometrieeigenschaft abzugleichen, und die Beschichtungsdüse zum Beschichten des Bauteils nur dann anzusteuern, wenn die durch die Erfassungseinrichtung erfasste Geometrieeigenschaft mit dem vorbestimmten Beschichtungskriterium übereinstimmt oder dieses erfüllt.

Der Abgleich kann beispielsweise dadurch vollzogen werden, dass die erfasste Geometrieeigenschaft mit dem mindestens einen Beschichtungskriterium abgeglichen wird. Ist eine Abgleich-Voraussetzung erfüllt, kann so steuerungstechnisch eine Freigabe für die mindestens eine Beschichtungsdüse bereitgestellt werden, so dass das Bauteil, insbesondere punktuell, in dem Oberflächenbereich, für den die Abgleich-Voraussetzung erfüllt ist, beschichtet werden kann.

In einem weiteren Aspekt wird vorgeschlagen, dass das vorbestimmte Beschichtungskriterium eine Bezugshöhe des Bauteils, die eine Toleranz aufweisen kann, relativ zu der Erfassungseinrichtung und/oder der Beschichtungsdüse oder einen sonstigen eine Toleranz aufweisenden, bauteilbezogenen Abstand aufweist.

Bei der Bezugshöhe kann es sich um eine Höhe und/oder eine Breite und/oder eine Länge handeln, wobei die Höhe und/oder die Breite und/oder die Länge vorzugsweise mit einem Toleranzintervall versehen ist. Beispielsweise kann durch die Erfassungseinrichtung eine Höhe der Bauteiloberfläche zu der Erfassungseinrichtung zumindest für mehrere Punkte auf der Bauteiloberfläche, vorzugsweise hochaufgelöst ermittelt werden. Das Beschichtungskriterium kann beispielsweise eine Soll-Höhe ± einer vorbestimmten Toleranz aufweisen. Misst die Erfassungseinrichtung für einen Punkt der Bauteiloberfläche eine Ist-Höhe, die der Soll-Höhe ± der vorbestimmten Toleranz entspricht, ist das Beschichtungskriterium erfüllt, so dass für diesen Punkt der Bauteiloberfläche eine Freigabe der mindestens einen Beschichtungsdüse zum Beschichten mit dem Beschichtungsmedium erfolgen kann. Es kann somit eine diesbezügliche Ansteuerung der mindestens einen Beschichtungsdüse zum Aufbringen des Beschichtungsmediums erfolgen.

In einem weiteren Aspekt wird vorgeschlagen, dass die Beschichtungsvorrichtung ferner einen Roboterarm oder ein Verfahr-Portal aufweist, wobei die mindestens eine Erfassungseinrichtung und/oder die mindestens eine Beschichtungsdüse an dem Roboterarm oder dem Verfahr-Portal angeordnet ist/sind, und wobei der Roboterarm oder das Verfahr-Portal dazu eingerichtet ist, die mindestens eine Erfassungseinrichtung und/oder die mindestens eine Beschichtungsdüse in mindestens einem Bewegungsfreiheitsgrad relativ zu dem Bauteil zu verfahren.

Vorzugsweise kann die mindestens eine Reinigungsdüse durch den Roboterarm oder das Verfahr-Portal entlang mindestens zweier Bewegungsfreiheitsgrade verfahren werden, beispielsweise parallel zu einer Oberfläche des Bauteils. Auch eine komplexe Bewegung der mindestens einen Beschichtungsdüse ist möglich, und kann beispielsweise bei einer komplexen Oberflächenbeschaffenheit des Bauteils auch bevorzugt sein. Die Beschichtungsvorrichtung kann vorzugsweise mehrere Beschichtungsdüsen aufweisen, die beispielsweise an einem Auslegerarm des Roboterarms oder des Verfahr-Portals aneinandergereiht bzw. beabstandet voneinander angeordnet sein können. Die Beschichtungsdüsen können beispielsweise als eine Düsenleiste ausgebildet sein, die durch den Roboterarm oder das Verfahr-Portal dann entlang mindestens einer Verfahr-Richtung bzw. in dem mindestens einen Bewegungsfreiheitsgrad verfahrbar sind. Bei einer derartigen Düsenleiste ist es bevorzugt, wenn jede einzelne Beschichtungsdüse individuell ansteuerbar bzw. öffenbar und/oder schließbar ist. Vorzugsweise ist jeder Beschichtungsdüse hierzu ein ansteuerbares Ventil, beispielsweise ein Magnetregelventil zugewiesen.

Ein Roboterarm ist eine Art mechanischer Arm, der Funktionen ähnlich einem menschlichen Arm ausführen kann. Der Roboterarm kann Teil eines größeren Robotersystems sein. Der Roboterarm verfügt vorzugsweise über mehrere Gelenke, die Bewegungen in mehreren Freiheitsgraden ermöglichen. Der Roboterarm kann einen Endeffektor aufweisen, an dem vorliegend vorzugsweise zumindest die mindestens eine Beschichtungsdüse und vorzugsweise auch die Erfassungseinrichtung angeordnet ist/sind.

Ein Verfahr-Portal, auch als Portalroboter bezeichnet, ist eine Struktur, die es ermöglicht, Bewegungen entlang mehrerer Achsen bzw. in mehreren Freiheitsgraden mit hoher Präzision durchzuführen. Dieses System ist ausgestattet mit einer oder mehreren Schienen, auf denen sich Schlitten oder ähnliche Komponenten horizontal und vertikal bewegen können. Die Achsen werden vorzugsweise als Portalachsen bezeichnet.

In einem weiteren Aspekt wird vorgeschlagen, dass das Beschichtungsmedium als ein Haftvermittler zwischen dem Bauteil und einer weiteren Komponente, beispielsweise einem Schaum bzw. einem Stabilisator zum Stabilisieren von Komponenten des Bauteils, fungiert. Besonders bevorzugt weist das Beschichtungsmedium einen Ultraviolett-Lack auf.

Ein Haftvermittler ist eine Substanz, die dazu verwendet wird, die Haftung zwischen zwei Materialien zu verbessern, die ggf. nicht gut miteinander verbunden werden können. Vorliegend dient das Beschichtungsmedium vorzugsweise als ein Haftvermittler zwischen einem Oberflächenmaterial, vorzugsweise einem Kunststoff, des Bauteils und dem Material des Stabilisators. Ein Ultraviolett-Lack, auch UV-Lack genannt, ist ein spezieller Oberflächenbeschichtungsstoff, der unter Einwirkung von ultraviolettem Licht aushärtet. UV-Lacke basieren auf einer Formulierung aus Monomeren und Oligomeren, die durch Fotoinitiatoren aktiviert werden. Wenn die beschichteten Oberflächen UV-Licht ausgesetzt werden, lösen die Fotoinitiatoren eine chemische Reaktion aus, die zu einer sehr schnellen Polymerisation führt. Dieser Vorgang verwandelt den flüssigen Lack in eine feste, dauerhafte Beschichtung. Die Aushärtung unter UV-Licht ist schnell, was Produktionsprozesse beschleunigt und Energie spart, da keine langen Trocknungszeiten wie bei herkömmlichen Lacken erforderlich sind.

In einem weiteren Aspekt wird vorgeschlagen, dass die Beschichtungsvorrichtung eine Vorrichtung zur Temperaturkompensation mindestens einer temperaturabhängigen Eigenschaft des Beschichtungsmediums, insbesondere einer Fließgeschwindigkeit, aufweist.

Vorzugsweise kann die Beschichtungsvorrichtung hierzu einen Temperatursensor aufweisen, der eine Temperatur der Umgebung und/oder eine Oberflächentemperatur des Bauteils, ggf. auch ortsaufgelöst erfasst. Durch physikalische Eigenschaften des Beschichtungsmediums kann dessen Reaktion auf eine Temperaturänderung ermittelt werden, wobei die Funktionszusammenhänge zum Ansteuern der mindestens einen Beschichtungsdüse genutzt werden können. Ist beispielsweise eine Temperaturabhängigkeit der Fließgeschwindigkeit des Beschichtungsmediums bekannt, kann durch die gemessene Temperatur darauf geschlossen, werden, in welcher Zeit das Beschichtungsmedium im Stillstand welche Flussstrecke zurücklegt. Durch diese Information kann die mindestens eine Beschichtungsdüse vorzugsweise eine Steuerinformation erhalten, die Beschichtung der Bauteiloberfläche derart anzupassen, dass unter Beachtung der Flussgeschwindigkeit nur ein vorbestimmter Bereich der Bauteiloberfläche beschichtet wird. Eine weitere temperaturabhängige Eigenschaft kann eine Viskosität des Beschichtungsmediums sein.

In einem weiteren Aspekt wird ein System vorgeschlagen. Das System weist eine Beschichtungsvorrichtung gemäß einem der vorliegend beschriebenen Aspekte und ein Bauteil auf. Das Bauteil ist vorzugsweise zumindest ein Teil eines (Hochvolt-) Energiespeichers und weist ein Zellcluster mit mehreren Energiespeicherzellen, eine Zell-Kontaktiereinrichtung und einen Summenstromverbinder auf.

Der (Hochvolt-)Energiespeicher ist vorzugsweise für den Einsatz in einem Fahrzeug geeignet. Der (Hochvolt-)Energiespeicher kann auch ein stationärer Energiespeicher sein. Als "Hochvolt" wird vorzugsweise ein Energiespeicher bezeichnet, der eine Gesamtausgangsspannung von mindestens 250 Volt, vorzugsweise von mindestens 400 Volt, besonders bevorzugt von mindestens 800 Volt, aufweist.

Das Bauteil kann ein Bestandteil eines Energiespeichersystems sein. Es kann sich um eine Komponente handeln, die in verschiedenen Arten von Energiespeichern wie Batterien oder Kondensatoren eingesetzt wird. Ein Zellcluster mit mehreren Energiespeicherzellen beschreibt ein Cluster oder eine Gruppe von Energiespeicherzellen, die zusammenarbeiten, um Energie zu speichern und bereitzustellen. Die Zell-Kontaktiereinrichtung dient vorzugsweise dazu, die einzelnen Energiespeicherzellen elektrisch zu verbinden. Sie ermöglicht die Übertragung von elektrischem Strom zwischen den Zellen und sorgt für eine ordnungsgemäße Verteilung der elektrischen Last. Ein Summenstromverbinder verbindet die Ströme der einzelnen Zellen zu einem Gesamtstrom. Der Summenstromverbinder ist verantwortlich dafür, dass der kombinierte Strom der Einzelzellen effizient an die externen Lasten oder weitere Komponenten des Energiespeichersystems weitergeleitet wird. Der Energiespeicher wird aus Stabilitätsgründen und aus Gründen der Steifigkeit und/oder Festigkeit durch einen Stabilisator, beispielsweise einen Schaum oder ein Harz, stabilisiert. Als Haftvermittler zwischen den Zellen bzw. einer jeweiligen Zellschulter einer jeweiligen Zelle und dem Stabilisator, insbesondere dem Schaum, ist vorzugsweise ein UV-Lack aufgetragen. Die punktgenaue Aufbringung dieses UV-Lackes als Haltvermittler mittels der mindestens einen Beschichtungsdüse, die vorzugsweise ein Jet-Ventil aufweist, auf die zu benetzenden Oberflächen der Zellschulter wird vorliegend durch die Beschichtungsvorrichtung ermöglicht. Es wird ermöglicht, indem die mindestens eine Geometrieeigenschaft durch die Erfassungseinrichtung, insbesondere punktuell, ermittelt wird, und die Zellen in dem Zellschulterbereich nur dort beschichtet werden, wo die Geometrieeigenschaft das vorbestimmte Beschichtungskriterium erfüllt. Eine Benetzung außerhalb der Zellschultern würde zum Ausschuss des Energiespeichers führen. Aufgrund der Toleranzen des gesamten Hochvoltspeichers ist die Benetzung der Zellschultern mittels eines feststehenden Druckbildes bzw. einer feststehenden Druckschablone nicht möglich, da dies zu unzulässigen Benetzungen von Summenstromverbindern, Zwischenräumen, Flachbandkabeln usw. führen würde. Dies kann durch die Beschichtungsvorrichtung unterbunden werden.

In einem weiteren Aspekt wird vorgeschlagen, dass das System ferner eine Trocknungsvorrichtung zum zumindest teilweisen Trocknen des Beschichtungsmediums aufweist.

Die Trocknungsvorrichtung ist vorzugsweise eine Ultraviolett-Licht-basierte Trocknungsvorrichtung. Die Trocknungsvorrichtung kann zum Vortrocknen und/oder zum Aushärten des Beschichtungsmediums ausgebildet sein. Die Trocknungsvorrichtung kann auch eine Komponente der Beschichtungsvorrichtung sein. Die Beschichtungsvorrichtung kann beispielsweise eine Trocknungsvorrichtung zum Vortrocknen des Beschichtungsmediums unmittelbar nach dem Aufbringen durch die mindestens eine Beschichtungsdüse aufweisen, um derart beispielsweise ein Fließen des Beschichtungsmediums auf der Bauteiloberfläche direkt nach dem Aufbringen des Beschichtungsmediums zu unterbinden. Die Trocknungsvorrichtung kann auch zum Aushärten des Beschichtungsmedium verwendet werden, und dazu als zusätzliche Einrichtung in der Fertigungskette nach der Beschichtungsvorrichtung angeordnet sein. Die Trocknungsvorrichtung kann auch der Beschichtungsvorrichtung nachgeführt werden. Die Trocknungsvorrichtung kann hierzu an dem Roboterarm oder dem Verfahr-Portal angeordnet sein. Die UV-Lampen der Trocknungsvorrichtung sind vorzugsweise mit einer Intensitätskontrolle ausgestattet, die vor jedem Auftrag eine Intensität der Lampen prüft, um so ein optimales Trocknungsergebnis zu erreichen.

In einem weiteren Aspekt wird vorgeschlagen, dass das System ferner eine Einrichtung zur Messung einer Schichtdicke des Beschichtungsmediums nach dem Aufbringen aufweist. Diese Schichtdickenmessung dient vorzugsweise einer Qualitätskontrolle nach dem Auftragen des Beschichtungsmediums.

In einem weiteren Aspekt wird ein Energiespeicher für ein Fahrzeug vorgeschlagen. Der Energiespeicher weist mindestens ein Zellcluster mit mehreren Energiespeicherzellen, eine Zell-Kontaktiereinrichtung und einen Summenstromverbinder auf, wobei zumindest Teilbereiche der Energiespeicherzellen, insbesondere nur Zellschulterbereiche der Energiespeicherzellen, mit einem Beschichtungsmedium, insbesondere einem Ultraviolett-Lack, das durch eine Beschichtungsvorrichtung, wie sie vorliegend beschrieben ist, aufgebracht ist, beschichtet sind.

Der Energiespeicher kann auch noch weitere Komponenten aufweisen. Der Energiespeicher ist nur an Stellen mit dem Beschichtungsmedium beschichtet, an denen die Funktion des Energiespeichers nicht durch das Beschichtungsmedium beeinträchtigt werden kann. Das Beschichtungsmedium darf beispielsweise nicht in Zellzwischenräume gelangen, da dies im Betrieb des Energiespeichers zu einem Kurzschluss führen könnte. Das Beschichtungsmedium darf nicht auf die Zell-Kontaktiereinrichtung und/oder die Summenstromverbinder gelangen, da dies zu einem fehlerhaften Kontaktieren und ggf. zu einem Kurzschluss oder einem Ausfall des Energiespeichers führen könnte.

In einem weiteren Aspekt wird vorgeschlagen, dass der Energiespeicher ferner ein Gehäuse, in dem das mindestens eine Zellcluster, die Zell-Kontaktiereinrichtung und der Summenstromverbinder zumindest teilweise angeordnet sind, und ein Stabilisierungsmedium, das zum Stabilisieren des Energiespeichers in das Gehäuse eingebracht ist, aufweist. Das Beschichtungsmedium fungiert als Haftvermittler zwischen den Energiespeicherzellen und dem Stabilisierungsmedium, um derart ein Ablösen des Stabilisierungsmedium von den Energiespeicherzellen, insbesondere in einem Hochleistungsbetrieb des Energiespeichers, zu verhindern oder zumindest zu minimieren.

In einem weiteren Aspekt wird vorgeschlagen, dass das Stabilisierungsmedium einen reaktiven Schaum, insbesondere einen Zweikomponenten-Schaum, oder ein Harz aufweist. Auch andere Stabilisatoren sind grundsätzlich denkbar.

In einem weiteren Aspekt wird ein Verfahren zum Aufbringen eines Beschichtungsmediums auf einem Bauteil vorgeschlagen. Das Verfahren weist ein Erfassen mindestens einer Geometrieeigenschaft des Bauteils mittels einer Erfassungseinrichtung und insbesondere selektives Beschichten des Bauteils durch das Beschichtungsmedium in Abhängigkeit der mindestens einen Geometrieeigenschaft und in Abhängigkeit mindestens eines auf der mindestens einen Geometrieeigenschaft basierenden vorbestimmten, bauteilabhängigen Beschichtungskriteriums durch mindestens eine relativ zu dem Bauteil verfahrbare Beschichtungsdüse auf.

Das Verfahren kann ferner ein Vortrocknen des Beschichtungsmediums durch eine Trocknungseinrichtung nach dem Aufbringen des Beschichtungsmediums aufweisen. Das Verfahren kann ferner ein Aushärten des Beschichtungsmediums durch eine Trocknungseinrichtung aufweisen. Das Erfassen der mindestens einen Geometrieeigenschaft kann Inline mit dem Aufbringen des Beschichtungsmediums, jedoch vorauseilend erfolgen.

Das Beschichtungsmedium kann vorzugsweise mit einer Austragsfrequenz von 100 Hz bis 2000 Hz aus der mindestens einen Beschichtungsdüse ausgetragen werden. Die Erfassung der mindestens einen Geometrieeigenschaft durch die Erfassungseinrichtung erfolgt vorzugsweise mit einer Auflösung, insbesondere einem Punkt-zu-Punkt-Rasterabstand, von 0,1 mm. Auch eine höhere oder geringere Auflösung ist denkbar. Eine Verfahrgeschwindigkeit der mindestens einen Beschichtungsdüse ist 100 bis 2000 mm/s und ergibt sich vorzugsweise aus der Austragsfrequenz und dem Punkt-zu-Punkt-Rasterabstand. Das Beschichtungsmedium kann vorzugsweise in einem Vorkreislauf und/oder in der mindestens einen Beschichtungsdüse vorgeheizt werden. Die mindestens eine Beschichtungsdüse und/oder die Beschichtungsvorrichtung kann/können hierzu mindestens eine Heizeinrichtung aufweisen. Ein Auftragungsabstand zwischen zeilenweiser Auftragung des Beschichtungsmediums beträgt vorzugsweise Zeile-zu-Zeile größer gleich 0,2 mm, beispielsweise 0,4 mm, 0,6 mm oder 0,8 mm oder jeglicher anderer Zwischenwert. Der Auftragungsabstand ist vorzugsweise kleiner als 2 mm. Vorzugsweise ist die Beschichtungsvorrichtung dazu eingerichtet, mindestens 85 % der zu beschichtenden Bauteiloberfläche mit dem Beschichtungsmedium zu beschichten. Der Roboterarm oder das Verfahr-Portal kann mit einer Verfahrgeschwindigkeit von mindestens 5 m/min bzw. 93 mm/s bewegt werden. Das Beschichtungsmedium kann durch eine Trocknungseinrichtung vorzugsweise in einem Abstand von 100 mm zu der Bauteiloberfläche getrocknet und/oder ausgehärtet werden. Die Beschichtungsvorrichtung kann vorzugsweise zum Trocknen bzw. Aushärten einen Vor- und/oder Nachlaufweg von jeweils mindestens 100 mm aufweisen.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf sämtliche Ausführungen der Erfindung beziehen, ohne jeweils separat genannt zu werden.

Ausführungsformen der Erfindung sind in den Zeichnungen schematisiert dargestellt und werden nachfolgend beispielhaft erläutert. Es zeigen:
- Fig. 1: zeigt eine schematische Ansicht eines Systems mit einer Beschichtungsvorrichtung gemäß einem Ausführungsbeispiel.
- Fig. 2: zeigt eine schematische Ansicht eines Systems mit einer Beschichtungsvorrichtung gemäß einem Ausführungsbeispiel.
- Fig. 3: zeigt eine schematische Ansicht eines Systems mit einer Beschichtungsvorrichtung gemäß einem Ausführungsbeispiel.
- Fig. 4: zeigt eine schematische Ansicht eines Systems mit einer Beschichtungsvorrichtung gemäß einem Ausführungsbeispiel.
- Fig. 5: zeigt eine schematische Ansicht einer Bauteiloberfläche eines Bauteils in einer Draufsicht.
- Fig. 6: zeigt eine schematische Ansicht eines Systems mit einer Beschichtungsvorrichtung gemäß einem Ausführungsbeispiel.
- Fig. 7: zeigt eine schematische Ansicht einer Bauteiloberfläche eines Bauteils in einer Draufsicht.
- Fig. 8: zeigt ein schematisches Flussdiagramm eines Ausführungsbeispiels des vorliegenden Verfahrens.

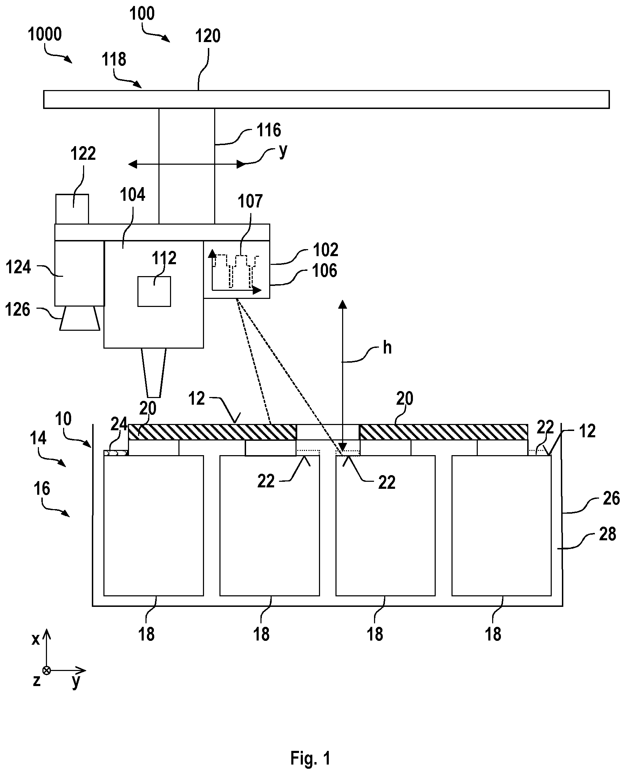

In Figur 1 ist ein System 1000 zum Aufbringen eines Beschichtungsmediums auf einem Bauteil 10 mittels einer Beschichtungsvorrichtung 100.

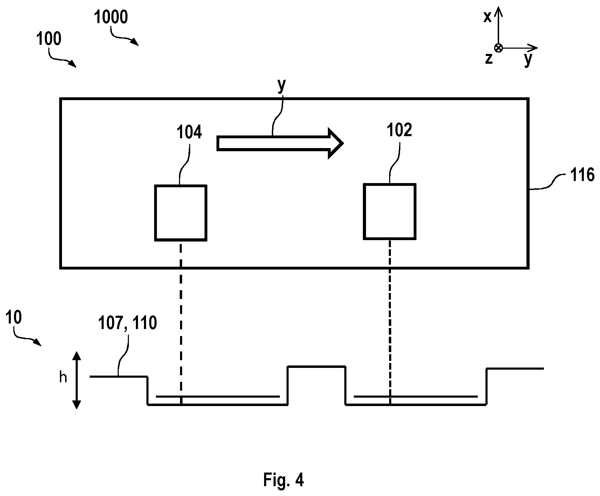

Die Beschichtungsvorrichtung 100 weist hierzu eine Erfassungseinrichtung 102 auf, die dazu eingerichtet ist, mindestens eine Geometrieeigenschaft h des Bauteils 10 zu erfassen. Vorliegend ist die Erfassungseinrichtung 102 dazu eingerichtet, eine Höhe einer Bauteiloberfläche 12 relativ zu der Erfassungseinrichtung 102 zu detektieren. Die Erfassungseinrichtung 102 kann die Geometrieeigenschaft h in einem spitzen Winkel zu der Bauteiloberfläche 12 (siehe Fig. 1-3) oder orthogonal zu der Bauteiloberfläche 12 (siehe Fig. 4) bestimmen.

Die Beschichtungsvorrichtung 100 weist ferner mindestens eine relativ zu dem Bauteil 10 verfahrbare Beschichtungsdüse 104 auf, die dazu eingerichtet ist, das Beschichtungsmedium in Abhängigkeit der mindestens einen Geometrieeigenschaft h und in Abhängigkeit mindestens eines auf der mindestens einen Geometrieeigenschaft h basierenden vorbestimmten, bauteilabhängigen Beschichtungskriteriums, insbesondere selektiv, zu beschichten. Das Beschichtungsmedium fungiert vorzugsweise als ein Haftvermittler zwischen einer Oberfläche des Bauteils 10 und mindestens einer weiteren Komponente des Systems 1000.

Die Beschichtungsvorrichtung 100 ist dazu eingerichtet, das vorbestimmte Beschichtungskriterium, vorzugsweise in Echtzeit, mit der mindestens einen erfassten Geometrieeigenschaft h abzugleichen, und die Beschichtungsdüse 104 zum Beschichten des Bauteils 10 nur dann, beispielsweise durch Öffnen eines Ventils, anzusteuern, wenn die durch die Erfassungseinrichtung 102 erfasste Geometrieeigenschaft h mit dem vorbestimmten Beschichtungskriterium übereinstimmt oder dieses erfüllt. Das Beschichtungskriterium kann beispielsweise eine Soll-Höhe mitsamt einer vorbestimmten Toleranz von beispielsweise ± 0,1 mm aufweisen. Nur wenn eine durch die Erfassungseinrichtung 102 erfasste Ist-Höhe mit der Soll-Höhe übereinstimmt bzw. innerhalb des Toleranzintervalls liegt, wird die mindestens eine Beschichtungsdüse 104 zum Beschichten angesteuert. In anderen Fällen kann das Beschichtungskriterium auch komplexer ausgebildet sein, beispielsweise eine Soll-Anordnung von Bezugspunkten zueinander auf der Bauteiloberfläche 12 aufweisen, die mit einer Ist-Anordnung von Referenzpunkten, die durch die Erfassungseinrichtung 102 erfasst werden, verglichen wird.

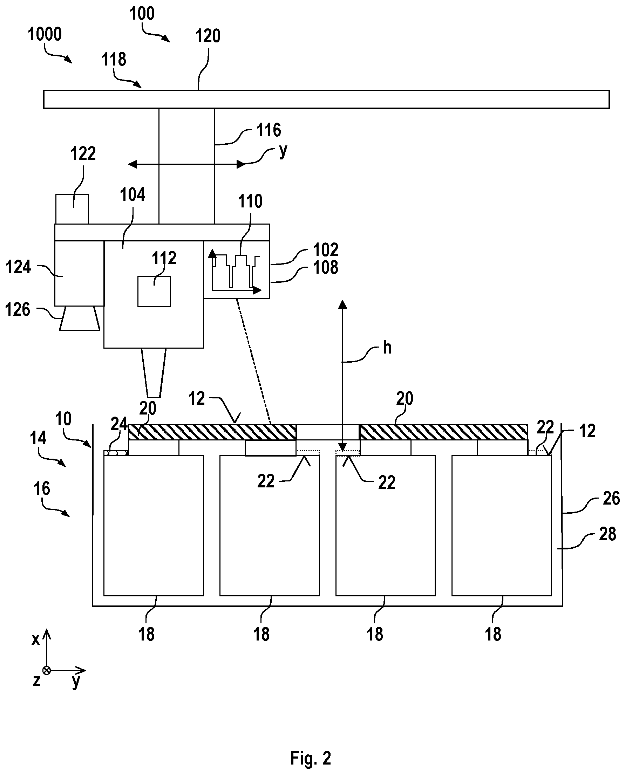

Die Erfassungseinrichtung 102 kann beispielsweise einen laserbasierten Triangulations-Sensor 106 zum insbesondere punktweisen Abtasten einer Höhe 107 (die vorliegend der Geometrieeigenschaft entspricht) des Bauteils 10 bzw. der Bauteiloberfläche 12 relativ zu der Erfassungseinrichtung 102 aufweisen. Alternativ kann die Erfassungseinrichtung 102 einen Laser-Profilsensor 108 (siehe Fig. 2) zum zeilenweisen bzw. linienweisen Erfassen eines Höhenprofils 110 des Bauteils 10 relativ zu der Erfassungseinrichtung 102 aufweisen.

Die Erfassungseinrichtung 102 kann zum Auswerten der Erfassungsinformationen eine Auswerteeinrichtung 112 aufweisen. Die Auswerteeinrichtung 112 kann auch außerhalb der Erfassungseinrichtung 102 vorgesehen und beispielsweise Teil der Beschichtungsvorrichtung 100 sein.

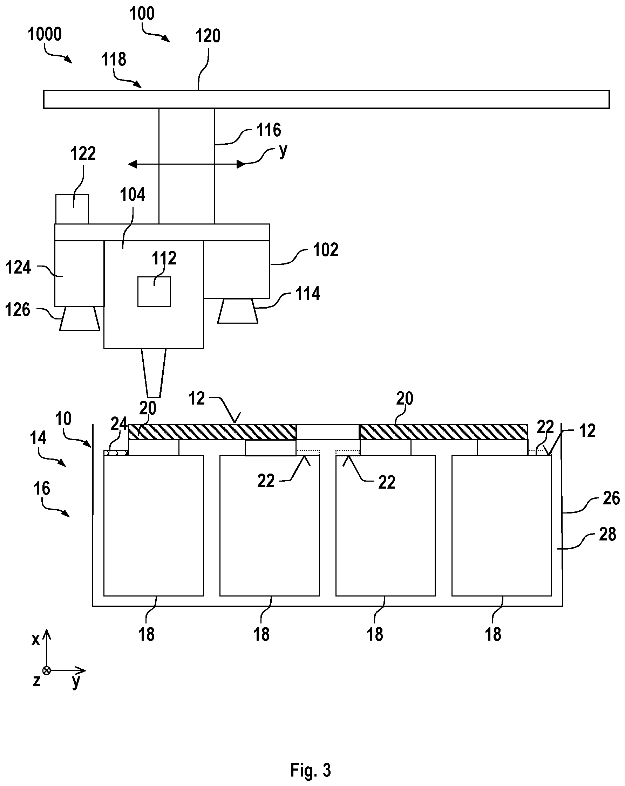

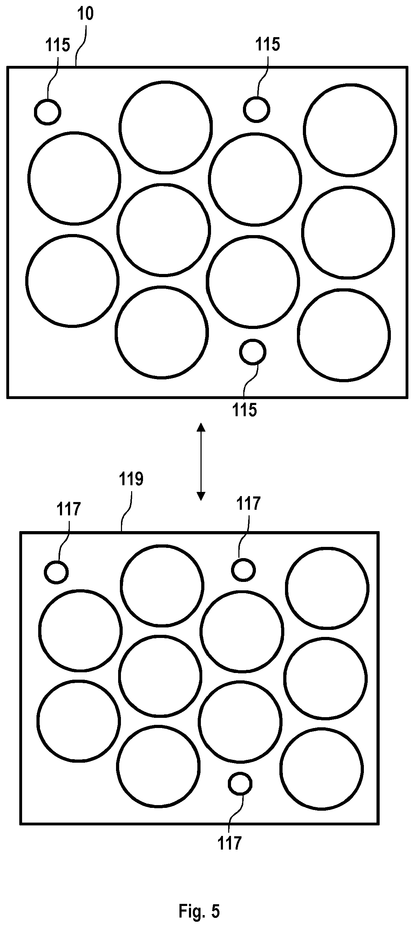

In anderen Ausführungen, siehe beispielsweise Fig. 3 und Fig. 5, kann die Erfassungseinrichtung 102 eine Kamera 114 aufweisen. Die Kamera 114 ist dazu ausgebildet, mehrere Referenzpunkte 115 an dem Bauteil 10 bzw. auf der Bauteiloberfläche 12 relativ zu sich selbst zu erfassen. Die Erfassungseinrichtung 102, insbesondere durch die Auswerteeinrichtung 112, ist dazu eingerichtet, die erfassten Referenzpunkte 115 mit entsprechenden Bezugspunkten 117 einer vorbestimmten Beschichtungsschablone 119 abzugleichen, und, im Falle einer Abweichung zwischen zumindest einem der Referenzpunkte 115 zu einem betreffenden Bezugspunkt 117, die Beschichtungsschablone 119 zumindest partiell auf Basis der Abweichung anzupassen, insbesondere zumindest partiell zu dehnen oder zu stauchen. Im Falle des in Fig. 5 gezeigten Beispiels würde die Beschichtungsschablone 119 beispielsweise gedehnt werden, um an die Oberfläche 12 des Bauteils 10 dynamisch angepasst zu werden.

Wie bereits schematisch aus den Fig. 1 bis 3 aufgrund der Anordnung der Komponenten entlang Richtung einer Verfahrachse y erkennbar ist, ist die Erfassungseinrichtung 102 dazu eingerichtet, die mindestens eine Geometrieeigenschaft h während des Beschichtungsvorgangs, insbesondere vorauseilend, zu ermitteln. Alternativ kann die Erfassungseinrichtung 102 auch dazu eingerichtet sein, die mindestens eine Geometrieeigenschaft h vor dem Beschichtungsvorgang zu ermitteln, was in den Fig. jedoch nicht gezeigt ist.

Die Erfassungseinrichtung 102 und die mindestens eine Beschichtungsdüse 104 sind vorliegend an einem Portalarm 116 eines Verfahr-Portals 118 angeordnet. Das Verfahr-Portal 118 weist eine Linearführung 120 auf, entlang derer der Portalarm 116 mindestens in der Verfahr-Richtung y beweglich ist. Alternativ zu einem Verfahr-Portal kann auch ein Roboterarm verwendet werden. Das Verfahr-Portal 118 ist dazu eingerichtet, die mindestens eine Erfassungseinrichtung 102 und die mindestens eine Beschichtungsdüse 104 in mindestens einem Bewegungsfreiheitsgrad, hier mindestens entlang der Verfahr-Richtung y, relativ zu dem Bauteil 10 zu verfahren.

Die Beschichtungsvorrichtung 100 weist ferner eine Vorrichtung zur Temperaturkompensation 122, vorliegend umfassend einen Temperatursensor, auf. Durch die Vorrichtung zur Temperaturkompensation 122 kann mindestens eine temperaturabhängige Eigenschaft des Beschichtungsmediums ermittelt und überwacht werden und insbesondere die mindestens eine Beschichtungsdüse 104 auch auf Basis dieser temperaturabhängigen Eigenschaft angesteuert werden. Die temperaturabhängige Eigenschaft kann insbesondere eine Fließgeschwindigkeit des Beschichtungsmediums sein.

Das System 1000 kann vorzugsweise auch eine Trocknungsvorrichtung 124 zum (Vor-) Trocknen oder Aushärten des Beschichtungsmediums aufweisen. Die Trocknungsvorrichtung 124 kann vorzugsweise mindestens eine UV-Lampe 126 aufweisen.

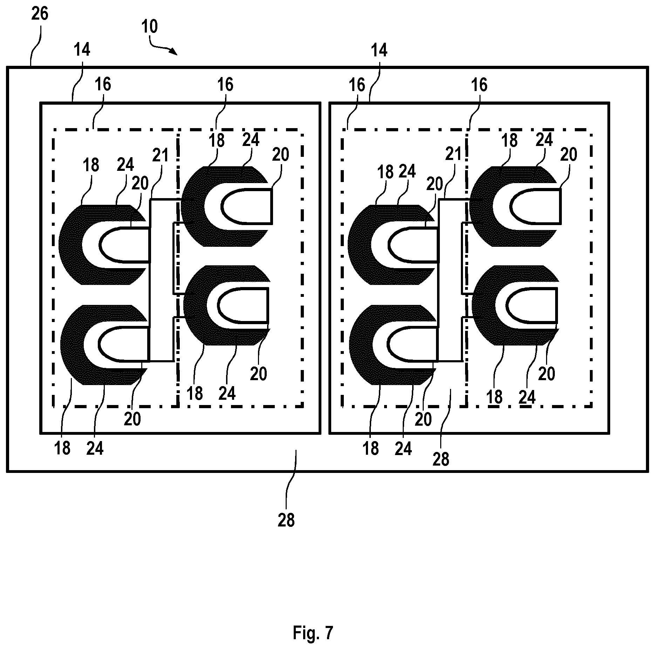

Das Bauteil 10 ist vorzugsweise zumindest ein Teil eines Energiespeichers 14. Das Bauteil 10 weist beispielsweise mehrere Komponenten auf. Das Bauteil 10 weist beispielsweise mindestens ein Zellcluster 16 mit mehreren Energiespeicherzellen 18 und eine Zell-Kontaktiereinrichtung 20 und einen Summenstromverbinder 21 (siehe Fig. 7) auf. Die Beschichtungseinrichtung 104 ist dazu ausgebildet, nur Teilbereiche der Energiespeicherzellen 18, insbesondere nur Zellschulterbereiche 22 der Energiespeicherzellen 18, mit dem Beschichtungsmedium zu beschichten, was in den Fig. 1-3 durch das Bezugszeichen 24 gekennzeichnet ist. Nach dem Beschichten sind die Zell-Kontaktiereinrichtung 20 und der Summenstromverbinder hingegen vorzugsweise im Wesentlichen frei von Beschichtungsmedium. In den Fig. 1-3 sind zudem Zellschulterbereiche 22 gekennzeichnet, die noch nicht mit dem Beschichtungsmedium beschichtet wurden, jedoch noch zu beschichten sind. Dies ist schematisch jeweils durch eine gestrichelte Box gekennzeichnet. Das Beschichtungsmedium ist vorliegend ein UV-Lack. Es sind jedoch auch andere Lacke oder Primer denkbar, so dass dies nicht einschränkend zu verstehen ist.

Das Bauteil 10 bzw. der Energiespeicher 14 weist vorzugsweise ein Gehäuse 26 auf, in dem das mindestens eine Zellcluster 16, die Zell-Kontaktiereinrichtung 20 und der Summenstromverbinder zumindest teilweise angeordnet sind. Das Bauteil 10 bzw. der Energiespeicher 14 weist ferner ein Stabilisierungsmedium 28 auf, das zum Stabilisieren des Energiespeichers 14 in das Gehäuse 26 eingebracht ist. Das Beschichtungsmedium fungiert dabei, insbesondere in dem Zellschulterbereich 22, als Haftvermittler zwischen den Energiespeicherzellen 18 und dem Stabilisierungsmedium 28, um derart ein Ablösen des Stabilisierungsmedium 28 von den Energiespeicherzellen 18, insbesondere in einem Hochleistungsbetrieb des Energiespeichers 14, zu verhindern oder zumindest zu minimieren. Das Stabilisierungsmedium 28 weist vorzugsweise einen reaktiven Schaum oder ein Harz auf.

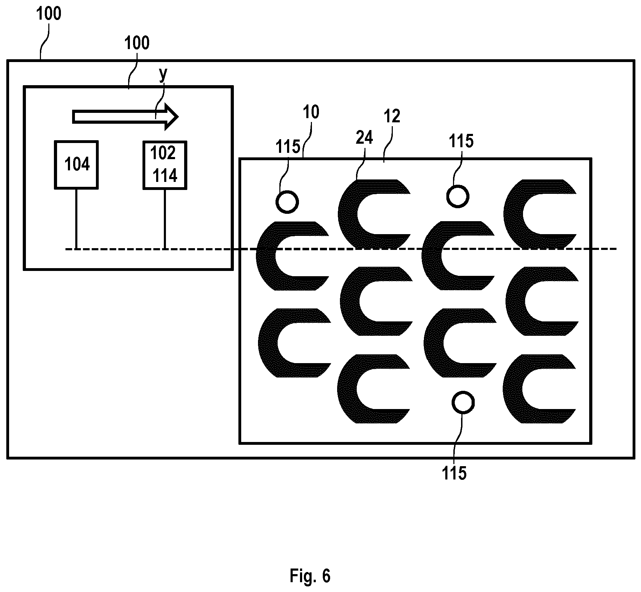

Fig. 6 zeigt eine schematische Ansicht eines Ausführungsbeispiels des Systems 1000. Die Erfassungseinrichtung 102 ist dabei eine Kamera 114, die eine optische Aufnahme von der Bauteiloberfläche 12 erzeugt und dabei die Referenzpunkte 115 erfasst. Anhand der Referenzpunkte 115 kann die Lage der zu beschichtenden Bereiche 24, vorliegend Zellschulterbereiche, bestimmt werden. Durch den Abgleich mit Bezugspunkten auf einer Beschichtungsschablone (in Fig. 6 nicht gezeigt) kann dann eine Ansteuerung der Beschichtungsdüse 104 erfolgen, um die noch zu beschichtenden Bereiche 24 zu beschichten. Alle außerhalb der Bereiche 24 liegenden Bereiche der Bauteiloberfläche 12 werden vorzugsweise nicht beschichtet.

Fig. 7 zeigt eine schematische Draufsicht auf eine Bauteiloberfläche 12 des als der Energiespeicher 14 ausgebildeten Bauteils 10. In Fig. 7 sind mehrere Zellcluster 16 mit den Zell-Kontaktiereinrichtungen 20 und Summenstromverbindern 21 gezeigt. Ferner sind schematisch die mit dem Beschichtungsmedium zu beschichtenden Zellschulterbereiche 24 gezeigt. In dem gezeigten Ausführungsbeispiel sind in dem Gehäuse 26 mehrere Energiespeicher 14 angeordnet und durch das Stabilisierungsmedium 28 relativ zu dem Gehäuse 26 und zueinander stabilisiert.

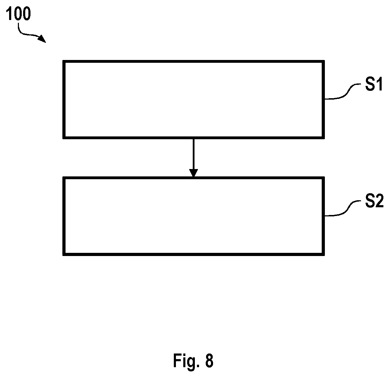

Fig. 8 zeigt ein Flussdiagramm eines Ausführungsbeispiels des vorliegenden Verfahrens, das durch die Beschichtungsvorrichtung 100 ausgeführt werden kann. Das Verfahren weist in einem Schritt S1 ein Erfassen mindestens einer Geometrieeigenschaft h des Bauteils 10 mittels einer Erfassungseinrichtung 102 und in einem Schritt S2 ein insbesondere selektives Beschichten des Bauteils 10 durch das Beschichtungsmedium in Abhängigkeit der mindestens einen Geometrieeigenschaft und in Abhängigkeit mindestens eines auf der mindestens einen Geometrieeigenschaft basierenden vorbestimmten, bauteilabhängigen Beschichtungskriteriums durch mindestens eine relativ zu dem Bauteil 10 verfahrbare Beschichtungsdüse 104 auf.

### Bezugszeichenliste

- 10: Bauteil
- 12: Bauteiloberfläche
- 14: Energiespeicher
- 16: Zellcluster
- 18: Energiespeicherzellen
- 20: Zell-Kontaktiereinrichtung
- 21: Summenstromverbinder
- 22: Zellschulterbereich
- 24: noch zu beschichtender Zellschulterbereich
- 26: Gehäuse
- 28: Stabilisierungsmedium
- 100: Beschichtungsvorrichtung
- 102: Erfassungseinrichtung
- 104: Beschichtungsdüse
- 106: Triangulations-Sensor
- 107: Höhe
- 108: Laser-Profilsensor
- 110: Höhenprofil
- 112: Auswerteeinrichtung
- 114: Kamera
- 115: Referenzpunkte
- 116: Portalarm
- 117: Bezugspunkte
- 118: Verfahr-Portal
- 119: Beschichtungsschablone
- 120: Linearführung
- 122: Vorrichtung zur Temperaturkompensation
- 124: Trocknungsvorrichtung
- 126: UV-Lampe
- 1000: System
- h: Geometrieeigenschaft
- y: Verfahr-Richtung
- x: Richtung
- z: Richtung

## Patentansprüche

1. Beschichtungsvorrichtung (100) zum Aufbringen eines Beschichtungsmediums auf einem Bauteil (10), die Beschichtungsvorrichtung (100) aufweisend, eine Erfassungseinrichtung (102), die dazu eingerichtet ist, mindestens eine Geometrieeigenschaft (h) des Bauteils (10) zu erfassen, und mindestens eine relativ zu dem Bauteil (10) verfahrbare Beschichtungsdüse (104), die dazu eingerichtet ist, das Beschichtungsmedium in Abhängigkeit der mindestens einen Geometrieeigenschaft (h) und in Abhängigkeit mindestens eines auf der mindestens einen Geometrieeigenschaft (h) basierenden vorbestimmten, bauteilabhängigen Beschichtungskriteriums, insbesondere selektiv, zu beschichten.

2. Beschichtungsvorrichtung (100) nach Anspruch 1, wobei die Erfassungseinrichtung (102) einen laserbasierten Triangulations-Sensor (106) zum Abtasten einer Höhe (107) des Bauteils (10) relativ zu der Erfassungseinrichtung (102) und/oder der Beschichtungsdüse (104), oder einen Laser-Profilsensor (108) zum Erfassen eines Höhenprofils (110) des Bauteils (10) relativ zu der Erfassungseinrichtung (102) und/oder der Beschichtungsdüse (104) aufweist.

3. Beschichtungsvorrichtung (100) nach Anspruch 1, wobei die Erfassungseinrichtung (102) eine Kamera (114) aufweist, wobei die Kamera (114) dazu ausgebildet ist, mehrere Referenzpunkte (115) an dem Bauteil (10) relativ zu der Erfassungseinrichtung (102) und/oder der Beschichtungsdüse (104) zu erfassen, wobei die Erfassungseinrichtung (102) dazu eingerichtet ist, die erfassten Referenzpunkte (115) mit entsprechenden Bezugspunkten (117) einer vorbestimmten Beschichtungsschablone (119) abzugleichen, und, im Falle einer Abweichung zwischen zumindest einem der Referenzpunkte (115) zu einem betreffenden Bezugspunkt (117), die Beschichtungsschablone (119) zumindest partiell auf Basis der Abweichung anzupassen, insbesondere zumindest partiell zu dehnen oder zu stauchen.

4. Beschichtungsvorrichtung (100) nach einem der vorstehenden Ansprüche, wobei die Erfassungseinrichtung (102) dazu eingerichtet ist, die mindestens eine Geometrieeigenschaft (h) während des Beschichtungsvorgangs, insbesondere vorauseilend, zu ermitteln, oder wobei die Erfassungseinrichtung (102) dazu eingerichtet ist, die mindestens eine Geometrieeigenschaft (h) vor dem Beschichtungsvorgang zu ermitteln.

5. Beschichtungsvorrichtung (100) nach einem der vorstehenden Ansprüche, wobei die Beschichtungsvorrichtung (100) dazu eingerichtet ist, das vorbestimmte Beschichtungskriterium, vorzugsweise in Echtzeit, mit der mindestens einen erfassten Geometrieeigenschaft (h) abzugleichen, und die mindestens eine Beschichtungsdüse (104) zum Beschichten des Bauteils (10) nur dann anzusteuern, wenn die durch die Erfassungseinrichtung (102) erfasste Geometrieeigenschaft (h) mit dem vorbestimmten Beschichtungskriterium übereinstimmt oder dieses erfüllt.

6. Beschichtungsvorrichtung (100) nach einem der vorstehenden Ansprüche, wobei das vorbestimmte Beschichtungskriterium ein eine Toleranz aufweisende Bezugshöhe des Bauteils (10) relativ zu der Erfassungseinrichtung (102) und/oder der Beschichtungsdüse (104) oder einen sonstigen eine Toleranz aufweisenden, bauteilbezogenen Abstand, insbesondere auch zwischen Bezugspunkten, aufweist.

7. Beschichtungsvorrichtung (100) nach einem der vorstehenden Ansprüche, wobei die Beschichtungsvorrichtung (100) ferner einen Roboterarm oder ein Verfahr-Portal (118) aufweist, wobei die mindestens eine Erfassungseinrichtung (102) und/oder die mindestens eine Beschichtungsdüse (104) an dem Roboterarm oder dem Verfahr-Portal (118) angeordnet ist/sind, und wobei der Roboterarm oder das Verfahr-Portal (118) dazu eingerichtet ist, die mindestens eine Erfassungseinrichtung (102) und/oder die mindestens eine Beschichtungsdüse (104) in mindestens einem Bewegungsfreiheitsgrad relativ zu dem Bauteil (10) zu verfahren.

8. Beschichtungsvorrichtung (100) nach einem der vorstehenden Ansprüche, wobei das Beschichtungsmedium als ein Haftvermittler zwischen einer Bauteiloberfläche (12) bzw. dem Bauteil (10) und einer weiteren Komponente fungiert.

9. Beschichtungsvorrichtung (100) nach einem der vorstehenden Ansprüche, wobei die Beschichtungsvorrichtung (100) eine Vorrichtung zur Temperaturkompensation (122) mindestens einer temperaturabhängigen Eigenschaft des Beschichtungsmediums, insbesondere einer Fließgeschwindigkeit, aufweist.

10. System (1000) aufweisend eine Beschichtungsvorrichtung (100) nach einem der vorstehenden Ansprüche und ein Bauteil (10), das ein Zellcluster (16) mit mehreren Energiespeicherzellen (18), eine Zell-Kontaktiereinrichtung (20) und einen Summenstromverbinder (21) aufweist, wobei die Beschichtungsvorrichtung (100) dazu ausgebildet ist, nur Teilbereiche der Energiespeicherzellen (18), insbesondere nur Zellschulterbereiche (22) der Energiespeicherzellen (18), mit dem Beschichtungsmedium zu beschichten, wobei nach dem Beschichten die Zell-Kontaktiereinrichtung (20) und der Summenstromverbinder (21) im Wesentlichen frei von Beschichtungsmedium sind.

11. System (1000) nach Anspruch 10, das ferner eine Trocknungsvorrichtung (124) zum Trocknen des Beschichtungsmediums aufweist.

12. Energiespeicher (14) für ein Fahrzeug aufweisend, mindestens ein Zellcluster (16) mit mehreren Energiespeicherzellen (18), eine Zell-Kontaktiereinrichtung (20) und einen Summenstromverbinder (21), wobei Teilbereiche der Energiespeicherzellen (18), insbesondere nur Zellschulterbereiche (22) der Energiespeicherzellen (18), mit einem Beschichtungsmedium, insbesondere einem Ultraviolett-Lack, das durch eine Beschichtungsvorrichtung (100) nach einem der vorstehenden Ansprüche aufgebracht ist, beschichtet sind.

13. Energiespeicher (14) nach Anspruch 12, ferner aufweisend, ein Gehäuse (26), in dem das mindestens eine Zellcluster (16), die Zell-Kontaktiereinrichtung (20) und der Summenstromverbinder (21) zumindest teilweise angeordnet sind, und ein Stabilisierungsmedium (28), das zum Stabilisieren des Energiespeichers (14) in das Gehäuse (26) eingebracht ist, wobei das Beschichtungsmedium als Haftvermittler zwischen den Energiespeicherzellen (18) und dem Stabilisierungsmedium (28) fungiert, um derart ein Ablösen des Stabilisierungsmedium (28) von den Energiespeicherzellen (18), insbesondere in einem Hochleistungsbetrieb des Energiespeichers (14), zu verhindern oder zumindest zu minimieren.

14. Energiespeicher (14) nach Anspruch 13, wobei das Stabilisierungsmedium (28) einen reaktiven Schaum oder ein Harz aufweist.

15. Verfahren zum Aufbringen eines Beschichtungsmediums auf einem Bauteil (10), das Verfahren aufweisend, Erfassen (S1) mindestens einer Geometrieeigenschaft (h) des Bauteils (10) mittels einer Erfassungseinrichtung (102) und insbesondere selektives Beschichten (S2) des Bauteils (10) durch das Beschichtungsmedium in Abhängigkeit der mindestens einen Geometrieeigenschaft und in Abhängigkeit mindestens eines auf der mindestens einen Geometrieeigenschaft basierenden vorbestimmten, bauteilabhängigen Beschichtungskriteriums durch mindestens eine relativ zu dem Bauteil (10) verfahrbare Beschichtungsdüse (104).
